# EUROPEAN PATENT SPECIFICATION

(11) **EP 1 727 326 B1**
(45) Date of publication and mention of the grant of the patent: **29.09.2010**
(21) Application number: 05011496.6
(22) Date of filing: 27.05.2005
(51) Int. Cl.: H04L 29/06

(54) **Network node for performing a handover to a router**
Netzwerkknoten zur Ausführung einer Rufweiterreichung zu einem Router
Noeud de réseau pour effectuer un transfert cellulaire à un routeur

(43) Date of publication of application: 29.11.2006
(73) Proprietor: NTT DoCoMo, Inc., Tokyo (JP)
(72) Inventor: Hillebrand, Joachim, 81379 München (DE)
(74) Representative: Zinkler, Franz

(56) References cited:
- EP-A- 1 524 806
- US-A1- 2003 193 895
- MISRA A ET AL: "IDMP-BASED FAST HANDOFFS AND PAGING IN IP-BASED 4G MOBILE NETWORKS" IEEE COMMUNICATIONS MAGAZINE, IEEE SERVICE CENTER. PISCATAWAY, N.J, US, vol. 40, no. 3, March 2002 (2002-03), pages 138-145, XP001102616 ISSN: 0163-6804

## Description

The present invention is in the field of telecommunications and, in particular, in the field of mobile communication networks.

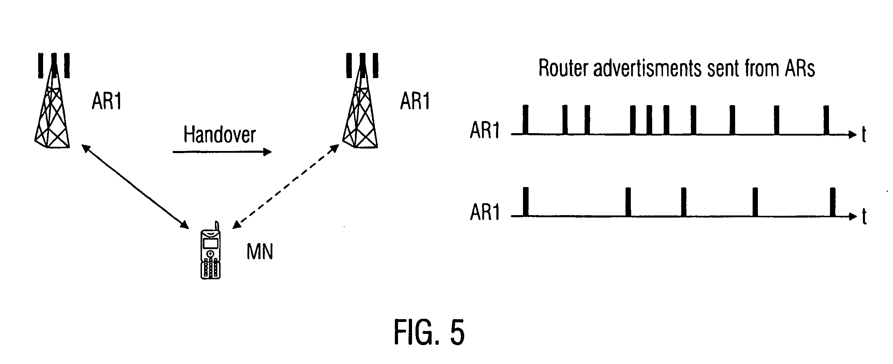

In communication systems, for example in IP-based mobile communication systems (IP = internet protocol), terminals, i.e. network nodes, perform handovers by detaching from an old access router and attaching to a new access router, as is depicted in Fig. 5 demonstrating a handover between two access routers. After attaching to the new access router, the mobile node needs to wait for the next unsolicited router advertisement to be received in order to configure its new network address, e.g. a IP address. Depending on the frequency of unsolicited router advertisements, this waiting time increases the handover latency and causes disruptions for applications during handover.

The problem is that it is not known when the next unsolicited router advertisements will be sent from the new access router because the router advertisements are usually sent in irregular intervals to blur traffic bursts on the network. As shown in Fig. 5, the router advertisements sent from access routers (AR) are sent at different time instants which do not overlap. If the time instants at which the next router advertisements are sent were known, then a handover could be synchronized on time in order to decrease the handover latency.

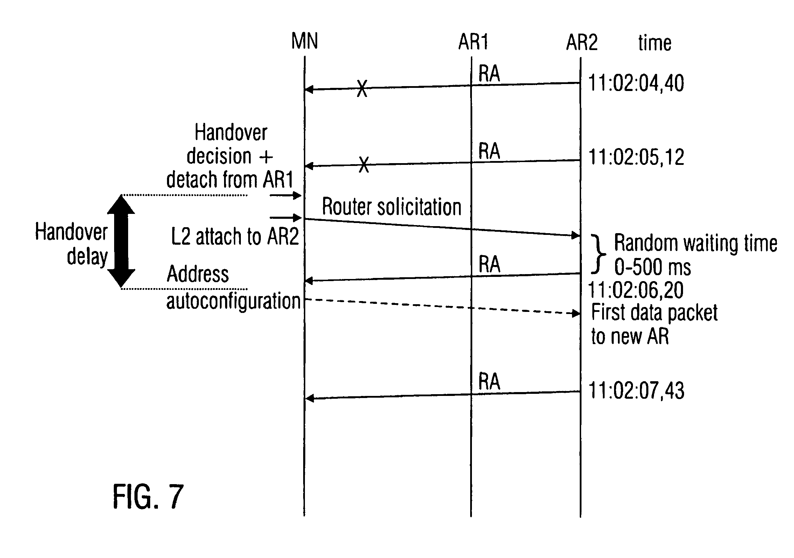

The router advertisement signals usually comprise information which is required for performing handover, for example a prefix associated with a IP network address of a respective router. An alternative solution is that the mobile nodes send a router solicitation to the access router after a handover to the router has been performed. The access router sends router advertisements in response to valid solicitations received on its advertising interface. However, after having received a valid solicitation, the access router needs to wait a random time period before sending the router advertisement in order to decrease traffic overhead, as depicted in Fig. 7, wherein X indicates that the router advertisement cannot be received if the access router 1 (AR1) and the access router 2 (AR2) are not using the same channel, for example the same frequency channel. This solution is standardized in RFC 2461 and disclosed in T. Narten et al, Neighbour Discovery for IP Version 6 in (IPv6), Internet Engineering Task Force (IETF), RFC 2461, December 1998. The drawbacks of this solution are the additional delay of one round-trip time (RTT) and the additional traffic overhead caused by router advertisement and solicitation packets transmitted from every individual mobile node (i.e. network node) performing a handover.

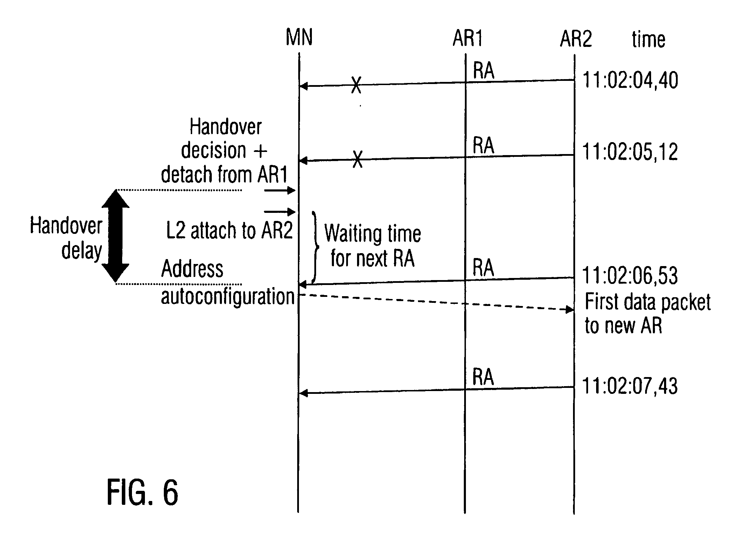

A conventional handover with unsolicited router advertisements is depicted in Fig. 6. The access router sends router advertisements at time instants which are separated by irregular time intervals to all mobile nodes in its range by using a multicast transmission. The router advertisements may contain the prefix of the new link-network which is required for address auto-configuration, as described in S. Thomson et al, IPv6 Stateless Address Auto-configuration, Internet Engineering Task Force (IETF), RFC 2462, December 1998.

A network node, for example, a mobile node, waits for the next router advertisement (RA) to obtain the missing information to create a new IP address after the network node has decided to perform a handover (e.g. by layer 2 triggers). The intervals for the router advertisements consist of a random number between a lower and a higher threshold, as defined in corresponding standards or specifications, e.g. IPv6.

Depending on the intervals between the router advertisements, the waiting time may be long when compared with the actual handover time. For example, a minimum router advertisement interval, according to IPv6 specification, is 3 seconds and according to mobile Ipv6 specification 0.03 seconds.

The handover latency could be improved when using lower values. However, shorter router advertisement intervals also impose a high traffic load caused by the router advertisement rate onto the radio link.

Fig. 7 shows the alternative possibility of sending router solicitations after a handover has been performed in order to trigger a new router advertisement from the access router. After a router solicitation has been received at the access router from a mobile node, the access router waits a random time interval, e.g. between 0 and 500 ms as described in the above-mentioned document, before answering by sending a new router advertisement. This delay results from traffic optimisation which is to be performed when several nodes attach within a short time interval to the same access router. This approach is, therefore, not suitable to reach seamless handovers with a handover latency less than 100 ms.

The concept depicted in Fig. 6 suffers from an undefined waiting time. The drawbacks of the scheme of Fig. 7 are a high handover delay, one round-trip delay, a high waiting time at the access router, and an increased traffic overhead due to required packets for every mobile node (MN).

In IP-based networks, by way of example, the handovers are performed on the basis of router advertisement messages (RA) broadcast from access routers (ARs). The purpose of a router advertisement, i.e. of a router advertisement signal transmitted by a router arranged in a communication network, is to assign a new network address to a network node, e.g. to a mobile node, after the handover has been performed. For example, according to the standard RFC 2461, the timing of the router advertisements follows random intervals, as depicted in Fig. 5, wherein the handover latency depends on the time of the next router advertisement, which causes problems for seamless handovers requiring less than 100 ms delay.

In GSM/UMTS networks, by way of example, synchronisation information and BTs (node B) identity are continuously sent from the BTs (e.g. synchronisation channel SCH), so that there is no need to wait for any information after the handover has been performed.

However, the IP networks do not automatically take a mobility of network nodes into account. In other words, the mobility of nodes was initially designed on a basis of fixed networks. Therefore, a mobile network node cannot communicate over the communication network prior to receiving a next router advertisement and after having disconnected from the current router. Thus, a handover latency is high.

EP 1 524 806 A2 discloses a system and method for providing handover of a mobile IP terminal in a wireless network. The mobile node sends, when handover is needed, a request for neighbor access router information to a fist access router currently communication with the mobile node, and selects, if the neighbor access router information is received, a second access router serving as a target access router using the received neighbor access router information. The router information comprises an access router information protocol (ARIP) packet having an MAC header, an IPv6 header, an UDP header and ARIP information. The ARIP information includes an address of an access router, medium info, channel info, QoS info, flags, authentication info, address prefix, and options. The "flags" field represents information indicating if the current access router transmitting the corresponding packet supports fast handover and paging.

It is the object of the present invention to decrease the handover latency in communication networks. This object is achieved by a network node according to claim 1 or by a router according to claim 13, or by a method for performing a handover according to claim 19, or by a method for routing according to claim 20, or by a computer program according to claim 21.

The present invention is based on the finding that the handover latency can be decreased if a time instant (advertisement time instant) at which a router transmits the router advertisement signal is known a priori. On the basis of the known advertisement time instants, a network node, for example a mobile network node, can determine a time instant at which a handover to a router is to be initialised (a handover time instant) and maintain communication to another router being currently involved in communication until the handover th the router has been performed or, at least, initialised, so that a transition time interval and, hence, handover latency, during which a network node does not transmit or receive data is reduced.

According to the present invention, a router informs the network node about the advertisement time instant by transmitting a time schedule signal comprising the information on the advertisement time instant over the communication network. For example, the router is broadcasting the time schedule signal over the communication network. Furthermore, the router may use a control channel for transmitting control information for transmitting the time schedule signal.

The inventive approach is based on unsolicited router advertisements within an exact scheduling scheme at the access routers. The information on scheduling times of the router advertisement (advertisement time instants) is exchanged on a basis of two additional new messages.

An access router informs the network nodes about the exact scheduling pattern of future router advertisements by sending a message related to the scheduling advertisement (time schedule signal).

A network node, e.g. a mobile node, may receive the scheduling advertisements from the router (e.g. from an access router and store the scheduling advertisements (e.g. the time schedule signal comprising information on the advertisement time instant at which the router transmits the router advertisement signals or, directly, the advertisement time instant) e.g. temporarily in its cache. In the case of a handover, the mobile node may inform other neighbouring access routers of the cached scheduling advertisements with a "neighbour scheduling notice" message (neighbour scheduling signal).

Thus, by following this procedure, access routers can learn about the router advertisement scheduling from neighbouring access routers independently of the used radio technology. When an access router (a router) sends a scheduling advertisement, it may also include the scheduling times (advertisement time instant) from neighbouring access routers in its scheduling advertisement. Thus, a network node receiving this information may organise its handover timing on a basis to efficiently reduce handover latency, by way of example.

The inventive scheme is advantageous if a mobile node having knowledge of the future router advertisement scheduling, i.e. advertisement time instants at which router advertisement signals are transmitted by the router, performs a handover to the access router. Thus, the mobile node (a network node) can delay the handover initiation and, therefore, the detachment from the old access router up to a time shortly before a next router advertisement is expected. The waiting time until the next router advertisement signal can therefore still be used for data transmission to or via the old access router which leads to a faster handover and to an increase of an effective data rate.

Moreover, the inventive scheme allows a reduction of the handover latency by keeping the frequency and traffic load for unsolicited router advertisement intervals low at the same time. Moreover, network resources, e.g. radio resources, can more efficiently be exploited because router advertisements can be sent at a lower rate which results in a reduction of an overhead traffic. Therefore, the inventive scheme can be employed in heterogeneous networks and independently of radio technologies. Furthermore, the inventive scheme is compatible with the standard communication schemes and, therefore, does not require expensive adaptations of the known technologies.

Further embodiments of the present invention are described with respect to the following figures, in which:
- Fig. 1: shows a network node according to an embodiment of the present invention;
- Fig. 2: demonstrates the inventive approach;
- Fig. 3: demonstrates the inventive approach;
- Fig. 4: shows a sequence of router advertisement signals according to an embodiment of the present invention;
- Fig. 5: demonstrates a handover between two access routers;
- Fig. 6: shows a conventional handover with unsolicited router advertisements; and
- Fig. 7: shows a conventional handover with router solicitations.

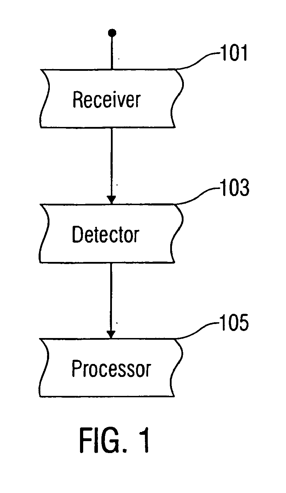

The network node shown in Fig. 1 comprises a receiver 101 having an output coupled to a detector 103, the detector 103 having an output coupled to a processor 105.

According to the present invention, the network node, for example a mobile node, is configured for performing a handover to a router in order to communicate over a communication network. A handover is a procedure according to which a network node which is currently communicating via another router performs a handover to the router and terminates the connection to the other router if, for example, a better communication quality can be achieved when communicating via the router. The quality can be determined e.g. on a basis of signal strength measurements.

According to the present invention, a time schedule signal is transmitted by the router in order to inform the network node about advertisement time instants or about a plurality of advertisement time instants at which the router transmits router advertisement signals comprising information required for communicating via the router. For example, the router advertisement signal comprises at least partly a network address of the router. If the communication network is a IP network then the router advertisement signal may comprise information on at least a part of the IP address of the router, for example, a prefix. This information is required by the network node in order to perform an address auto-configuration procedure in order to set up a new network address which is required for communicating over the communication network via the router to which the handover has been performed, especially in case of IP communication networks.

Thus, the receiver 101 is configured for receiving the time schedule signal from the router, wherein the time schedule signal comprises information on the advertisement time instant, at which the router transmits the router advertisement signal. For example, the router may transmit the time schedule signal via the communication network over the same communication channel which is also used for data transmission. The communication channel may be determined by a time slot or a frequency range. In this case, the receiver may also be configured for receiving data.

However, the router may be configured for transmitting the time schedule signal at a low rate or using another channel than that used for data transmission, for example a control channel or another frequency band or timeslot that that used data. Thus, the receiver 101 may be configured for receiving data and the time schedule signal via different channels (e.g. different frequency ranges, different time slots etc.). Furthermore, the network node may comprise two receivers, viz. the receiver 101 for receiving the time schedule signal and another receiver for receiving data. However, the receiver may be a standard receiver, for example a wireless receiver according to any wireless specification which is additionally configured for receiving the time schedule signals from the routers.

A received version of the time schedule signal is provided to the detector 103 which is configured for deriving the information on the advertisement time instant from the time schedule signal.

For example, the time schedule signal may comprise information on a reference time instant and information on a time interval separating the reference time instant and the advertisement time instant. The detector 103 may thus be configured for deriving the handover time instant by combining the reference time instant with the time interval. For example, the detector adds the time interval to the time instant in order to derive the advertisement time instant.

However, the derived advertisement time instant may be in the past. Moreover, it is possible that the time interval between the current time instant and the advertisement time instant is too short to initialise the handover. Thus, the detector 103 may be configured for combining a multiple of the time interval with the reference time instant in order to derive a future advertisement time instant at which the advertisement time signal is expected if the router advertisement signal is periodically transmitted by the router.

Furthermore, the router may be configured for transmitting a sequence of router advertisement signals wherein each router advertisement signal in the sequence of router advertisement signals is transmitted at a different advertisement time instant. In other words, the router may transmit a plurality of router advertisement signals (router advertisements) which constitute the sequence mentioned above within a predetermined time interval, for example within 700 ms.

The time schedule signal may comprise information on time intervals separating the time instants at which the router transmits router advertisement signals. Furthermore, the time schedule signal may comprise information on a reference time instant with respect to which a time interval or a plurality of time intervals are specified. In order to derive information on the advertisement time signal, the detector 103 may be configured for combining one or more time intervals with the reference time instant to derive the information on the advertisement time instant. For example, the detector 103 is configured for adding time intervals to the reference time instants to derive the information on the advertisement time instants.

As mentioned above, the router may be configured for periodically transmitting a sequence of router advertisement signals. Thus, the time schedule signal may comprise information on time intervals separating advertisement time instants at which the router transmits router advertisement signals in the sequence of router advertisement signals. Furthermore, the time schedule signal may comprise information on a reference time instant which may be required in order to derive the advertisement time instants on the basis of the known time intervals.

The reference time instant may be a certain time instant at which a certain advertisement signal is transmitted. For example, the reference time instant is the time instant at which a first router advertisement signal in a first sequence of router advertisement signals is to be transmitted or has been transmitted. However, the reference time instant may be any other time instant which can be used as time reference for calculating the advertisement time instants on the basis of the time intervals. For example, the reference time instant may be a current clock time with respect to which the time intervals can be specified.

The detector 103 may be configured for determining a duration of the sequence of router advertisement signals, i.e. for determining a length of a time interval associated with a duration of transmission of the router advertisements signals, on the basis of the information on the time interval. For example, the detector may sum up the time intervals to calculate (or at least to estimate) the duration of the sequence of router advertisement signals.

Furthermore, the detector 103 may be configured for combining the duration of the sequence with a time interval in the sequence of time intervals in order to derive the router advertisement time instant in reference to the reference time instant. For example, the detector 103 may determine a multiple of the duration of the sequence and add the multiple of the duration to the reference time instant in order to obtain a time instant in order to avoid deriving advertisement time instants which are in the past. The detector 103 may further add one or more time intervals in the sequence of time intervals in order to determine an advertisement time instant in the future so that handover can a priori be initialised.

According to the present invention, the time interval (which may be an exact time interval) between the router advertisements may be repeated continuously in a well-defined sequence. If, for example, five router advertisement signals with the following fixed time intervals: [567 ms, 345 ms, 421 ms, 783 ms, 620 ms] are chosen by an access point (router) then the access point will send the sixth advertisement 567 ms after the fifth advertisement (by using the value for the first advertisement again). Provided that the clock accuracy is sufficiently high (for example 0.1 % deviation within a predefined time interval) then the inventive scheme will ensure that future router advertisements can be calculated by a longer time period in advance.

In order to provide for compatibility with standard mobile nodes, the router advertisement values, i.e. the advertisement time instants, are preferably chosen from an interval with lower and higher thresholds that those defined in the corresponding standards, e.g. in the IPv6 specification. Furthermore, the statistical variance of the router advertisement vector may preferably be chosen high enough in order to avoid periodic bursts in the network traffic. Thus, the intervals may randomly be determined by the router so that a distribution of the advertisement time instant is e.g. Gaussian.

The advertisement time instant (or a plurality of advertisement time instants) derived by the detector 103 serves as a basis for determining a handover time instant, i.e. a time instant at which the handover to the router should (in advance) be initialised. In order to determine the handover time instant, the processor 105 may be configured for calculating the handover time instant on the basis of the advertisement time instant provided by the detector 103 and for initialising the handover to the router at the handover time instant. For example, the processor 105 may be configured for subtracting a latency time interval from the advertisement time instant in order to determine the handover time instant which precedes the advertisement time instant. For example, the latency time interval may be determined by a delay time which is required by the network node set up a connection to the router. For example, the latency time interval is determined by a layer 2 switching latency (for example a data link layer switching latency) of the network node.

According to an aspect, the processor 105 may be configured for determining the handover time instant while the network node is attached to another router, i.e. while the network node is communicating via the other router. Thus, the processor 105 may be configured for terminating the attachment to the other router (i.e. for disconnecting from the other router) at the handover time instant or shortly before the handover time instant, e.g. 0.5 ms to 1 ms before the handover time instant.

According to the present invention, the network node performs the handover after initialisation. However, in order to communicate over the communication network, in particular in case of IP-networks, the network node has to set up a network address, for example an IP address, in particular when communicating via the router. For example, the router advertisement signal comprises at least a part of a network address of the router, e.g. a prefix, which is transmitted to the network node in order to enable the same for reconfiguring its address for communicating. This task can be performed by the processor 105 which is, according to a further aspect, configured for generating a network address of the network nodes by combining at least a part of the network address of the router with at least a part of a network address of the network node, for example at least a part of a medium access control (MAC) address of the network node in order to generate the network address of the network node.

For example, the router (access router; AR) sends an IPv6 prefix "2001:728:2802:1000::/64". This means that the first 64 bits are fixed and should be used in the network (1 hex character = 4 bits). For example, a wireless LAN card has the MAC address 00-0D-60-CA-49-81. When the wireless interface of the network node receives the router advertisement, it combines the prefix with the MAC address and forms the following unique IPv6 address: 2001:728:2802:1000:020D:60FF:FECA:4981.

Since the MAC address consists of 48 bits, the mobile node adds the constant FFFE in the middle of the MAC address to fill the remaining 16 bits to reach 64 bits for the second part of the address (RFC 2462). Furthermore, the second bit of the MAC address will be set to 1 (020D instead of 000D). Hence, an identifier derived from the MAC address is used for the second part of the address. It may also be possible to use some other identifiers instead of the MAC address. For example, the above procedure is performed by the processor 105.

The processor may further be configured for either providing or determining the latency time interval, which is to be subtracted from the advertisement time instant in order to determine the handover time instant. As mentioned above, the latency time interval may be the layer 2 switching time. The layer 2 switching time consists for example for IEEE802.11 WLAN of:
- probe delay: scanning for layer 2 beacons. The network node, e.g. the mobile node (MN) creates a list of access points prioritized by the signal strength.
- re-authentication delay: authentication to the new access point:

- re-association delay: latency due to exchange of re-association frames.

For example, the probe delay is about 60 ms, the authentication delay is about 2 ms, and the re-association delay equals to 5 ms. Clearly, the layer 2 switching time depends on the underlying network technology so that the above delays can be different for other layer 2 technologies, as described in http://www.cs.umd.edu/-waa/pubs/handoff-lat-acm.pdf.

According to the present invention, two additional protocol messages between the router (e.g. an access router) and the network nodes (e.g. the mobile node) may be provided for the exchange of router advertisement schedules. The scheduling advertisements (the time schedule signal comprising the information on the router advertisement time instants) is sent e.g. infrequently from the access router to, by way of example, all mobile nodes being arranged in the range of the router. The scheduling advertisement includes, as described above, a description of the router advertisement scheduling used at the access router. The sequence of scheduled router advertisements may be described in a compact format so that future router advertisements (at future advertisement time instants) can be calculated with little effort. This can be done with e.g. an absolute time value of at least one advertisement (reference time instant, e.g. time in delay/hour/minute/second/millisecond format, Unix 32 bit time spec, Unix 64 bit time spec or similar) plus additional relative descriptions of further advertisements (e.g. the time intervals mentioned above, repeating sequence, mathematical algorithms required for determining the advertisement time instants by way of example only, or similar methods).

However, the network node (e.g. the mobile node) may be configured for sending a neighbour scheduling notice message to the router, e.g. to the access router, after a handover has been performed. The neighbour scheduling notice message may include the router advertisement schedule, i.e. the information on the advertisement time instant, as described with respect to the above-mentioned scheduling advertisement. According to the present invention, a set of different neighbouring scheduling notices from different access points (different routers) can be combined within one message.

Thus, the receiver 101 may be configured for receiving a further time schedule signal (further router advertisement schedule) from a further router. The further time schedule signal may comprise, according to the above descriptions, information on a further advertisement time instant at which the further router transmits a further router advertisement signal comprising information required for communicating via the further router over the communication network. For example, the time schedule signal mentioned above and the further time schedule signal may simultaneously be received by the receiver. However, both signals can be received at different time instants provided that the receiver is configured for simultaneously listening to messages which are transmitted from other routers. Accordingly, the detector 103 is configured for deriving the information on the further advertisement time instant from the time schedule signal, as described above.

For example, the further router may be configured for transmitting (or for periodically transmitting) a sequence of further router advertisement signals. In this case, the detector is configured for deriving the further advertisement time instant as described above. The processor 105 is, correspondingly, configured for determining a further handover time instant at which to initialise a handover to the further router as described above with respect to the handover time instant.

According to an aspect, the processor 105 may be configured for comparing the handover time instant at which to initialise a handover to the router with the further handover time instant at which to initialise a handover to the further router, and to initialise a handover to the router or to the further router in dependence on a comparison result. If, for example, the further handover time instant precedes the handover time instant, then the processor may be configured for initialising the handover to the further router or vice versa. It is also possible that the handover time instant is in the past. In this case, the processor 105 will initialise the handover to the further router. If, for example, the further handover time instant precedes the handover time instant, and if a signal strength associated with signals being transmitted by the router is higher than a signal strength associated with signals which are transmitted by the further router then the processor 105 may decide not to initialise the handover to the further router but to wait until the handover time instant while e.g. communicating with another router and to initialise the handover to the router at the handover time instant.

According to an aspect, the network node, e.g. a mobile node, may be configured for transmitting a neighbour scheduling signal to the router, wherein the neighbour scheduling signal comprises information on the further advertisement time instant at which the further router transmits the further router advertisement signal. Based on this information, the router may adapt the advertisement time instant such that e.g. collisions with the further advertisement time instant are avoided.

The inventive procedure for obtaining router advertisement sequences from neighbouring access routers may generally be employed for informing different routers of advertisement time instants, at which other routers transmit router advertisement signals, if the routers cannot communicate with each other. The routers may use this information in order to adjust the current advertisement scheduling to improve the network's performance.

Since different access routers may use different radio channels or even different radio technologies, for example GSM and UMTS, an access router may not be able to obtain the router advertisement schedule information on the advertisement time instants from neighbouring access routers on its own. The inventive scheme provides this information with the handover process from one access router to another router. After a mobile node has performed a handover, the mobile node sends the previously received router advertisement schedule, (e.g. the further time schedule signal mentioned above) to the new access router with the neighbour scheduling notice message (neighbour scheduling signal). Although the first handover in a communication system usually cannot take advantage of the exact advertisement schedule times, the more handovers are performed between neighbouring access routers, the faster the access router can learn about neighbouring advertisement schedules and adapt to the current network conditions.

The present invention further provides a router for routing signals over a communication network, wherein the router is configured for transmitting the time schedule signal (advertisement schedule) over the communication network to the network nodes mentioned above or to all network nodes being within a coverage area of the router.

The router comprises a provider which is configured for providing information on an advertisement time instant at which the router transmits a router advertisement signal comprising information required for communicating via the router. The router further comprises a transmitter configured for transmitting the time schedule signal over the communication network, the time schedule signal comprising information on the advertisement time instant. For example, the transmitter is configured for transmitting over the communication network within the channel used for data communication, within a control channel used for exchanging control information or within any other channel which is suitable for transmitting the time schedule signal.

According to an aspect, the advertisement time instant or advertisement time instants may be pre-stored in a memory element. In this case, the provider may be configured for accessing the storage element and for reading and providing the information on the advertisement time instant.

According to a further aspect, the provider may be configured for randomly determining the advertisement time instant with a predetermined time interval, for example within a time interval between 0 and 700 ms.

In order to randomly determine the advertisement time instant, the provider may randomly generate a number within the predetermined time interval.

According to a further aspect, the provider may be configured for determining the advertisement time instant upon considering further advertisement time instants associated with further routers so that the advertisement time instant is a different time instant than the further advertisement time instant at which the further router transmits router advertisement signals.

According to a further aspect, the provider may be configured for randomly determining a sequence of advertisement time instants at which the router transmits router advertisement signals. For example, the provider may be configured for randomly determining the sequence of advertisement time instants within a time interval of 1 second. Furthermore, the provider may be configured for generating a time schedule signal comprising the information on time intervals separating the time instants in the sequence of time instants. For example, the provider determines the time intervals between the randomly determined advertisement time instants in order to obtain the time schedule signal.

Furthermore, the provider may be configured for determining a reference time instant, for example a certain (e.g. a first) advertisement time instant in the sequence of advertisement time instants, wherein the reference time instant may be a part of the time schedule signal. In order to transmit the sequence of advertisement time instants, the transmitter may be configured for periodically transmitting the time schedule signal.

According to a further aspect of the present invention, the router may be configured for receiving a neighbour scheduling signal from a network node, as described above. The neighbour scheduling signal comprises information on a further advertisement time instant at which a further router transmits a further router advertisement signal over the communication network. According to the present invention, the provider is configured for determining the advertisement time instant in dependency on the further advertisement signal. For example, the provider determines the advertisement time instant at a time instant other than the further advertisement time instant so that an overlap is avoided. Moreover, the provider may decide that a transmission of one or more router advertisement signals can be avoided if a further router in the vicinity of the router can be used by the network node for performing the handover. Therefore, a transmission rate at which the advertisement signals are transmitted can be reduced which simultaneously reduces the network traffic.

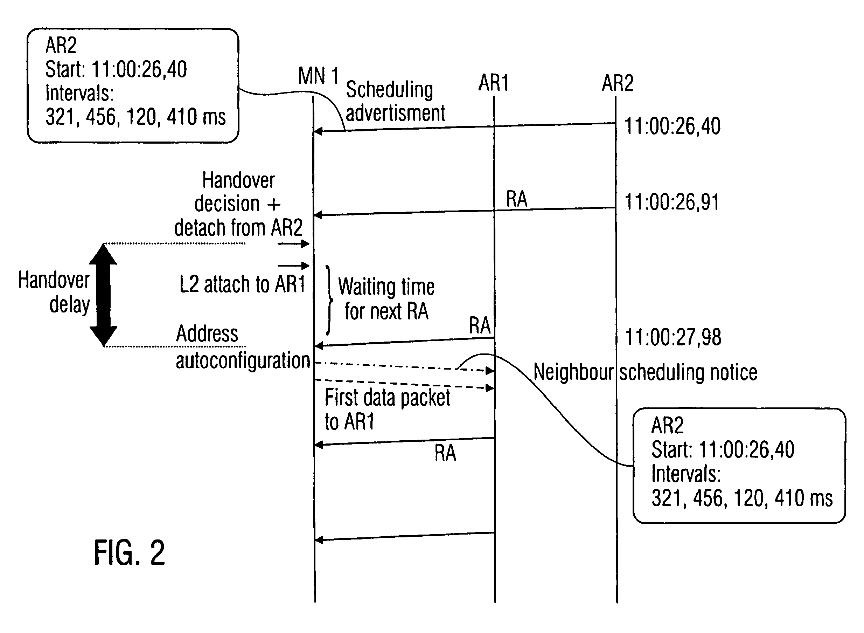

The inventive approach is depicted in Fig. 2 which shows an example for a procedure for obtaining router advertisement sequences from neighbouring access routers. It is considered that the network node (mobile node, MN) is initially attached to the second router (access router, AR2). In the initial phase, the first router (AR1) is unaware of the scheduling sequence of AR2. In this phase, handovers cannot benefit from handover optimisation due to missing scheduling information. After a handover is performed from AR2 to AR1, AR1 obtains the scheduling information of AR2 via the inventive network node, e.g. a mobile node, with the above-described neighbour scheduling notice message.

For example, AR2 transmits at 11:00:26,40, which serves in the following as a reference time instant, a scheduling advertisement, i.e. a time schedule signal comprising information on time intervals, which are irregular and separate the time instants at which router advertisements are transmitted. For example, at 11:00:26,91, AR2 transmits a router advertisement signal (RA) to the inventive network node (mobile node MN1), which is attached to AR2. Since the network node (MN1) now has knowledge of the next advertisement time instant, it may initialise the handover during the waiting time for the next router advertisement (RA). After performing an address auto-configuration upon receiving the router advertisement (RA) from AR1, communication via an AR1 can be performed so that data packets to AR1 can be transmitted.

Simultaneously, the network node (MN1) informs AR1 of the scheduling advertisement of AR2, as depicted in Fig. 2. Preferably, the clocks at the access routers are synchronised for scheduling exchange.

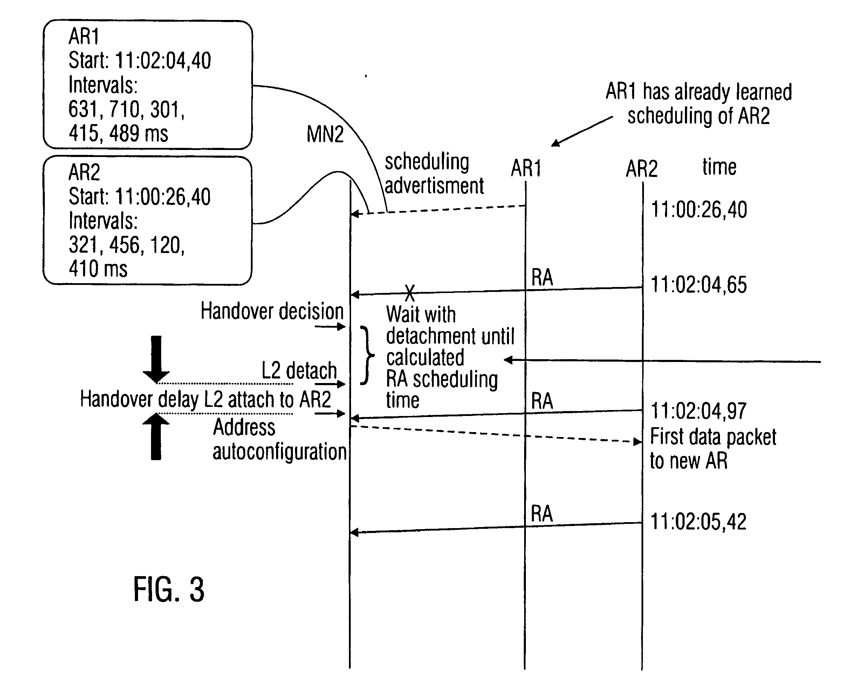

According to the present invention, the handover procedure with router advertisement scheduling can further be optimised, as depicted in Fig. 3.

Fig. 3 demonstrates a current network state, where AR1 and AR2 have already obtained information about each other's router advertisement schedules. Because the mobile node has also obtained information about the timing of future router advertisements at an AR2, it can delay the detachment from AR1 up until a short time before the arrival of the expected router advertisement from AR2, i.e. to determine the handover time instant preceding the advertisement time instant. The waiting time until the next router advertisement can, therefore, still be used for data transmission to the current access router, which is possible as long as the mobile node has the coverage of AR1.

However, as described above, the mobile node preferably considers its own layer 2 switching latency to be accurately timed for the reception of the router advertisement. For some combination of layer 2 technologies, the information which access router will be chosen after handover may not be determined beforehand. If in such a case information about the scheduling of neighbouring access routers is present at the mobile node, then the mobile node may chose the first calculated router advertisement of all neighbouring access routers in order to optimise the handover process. In other words, the mobile node may determine the router advertisement time instants associated with neighbouring access routers and to choose a router to which a handover is to be performed in dependence on the advertisement time instants associated with different routers.

For example, the mobile node has received a scheduling advertisement for AR2 with the start time 11:00:26:40 and the following relative time intervals [321 ms, 456 ms, 120 ms, 410 ms]. Therefore, the router advertisement sequence will repeat every 321 + 456 + 120 + 410 = 1307 ms.

When a later time instant (at about 11:02:04:70) the mobile node (MN) intends to initiate a handover, it calculates the next future router advertisement by adding the router advertisement intervals in the right order to distort time until the handover initiation time is exceeded. By, for example, adding 75 integer cycles of the total sum of 1307 ms plus the first advertisement of 321 ms, which is the reference time instant in this case, the next router advertisement will take place at the time 11:02:04,66.

Preferably, the clocks at the access routers (the routers) are synchronised with respect to each other by using a common time. This can be achieved, for example, using a satellite-based (GPS), a network-based (NTP), or a radio-based (e.g. DCF-77 signals) synchronisation method.

The clock accuracy at the mobile node representing the network node is preferably high enough to take advantage of scheduled advertisements even when no router scheduling advertisements are received after a longer time. Concerning the transport of scheduling information between access routers, an accurate clock is not required at the mobile node because the same received time values are transferred to other access routers. However, preferably, the expiration of router advertisement schedules at mobile nodes and access routers should be considered if router-scheduling information is not updated for a longer time because of a clock inaccuracy.

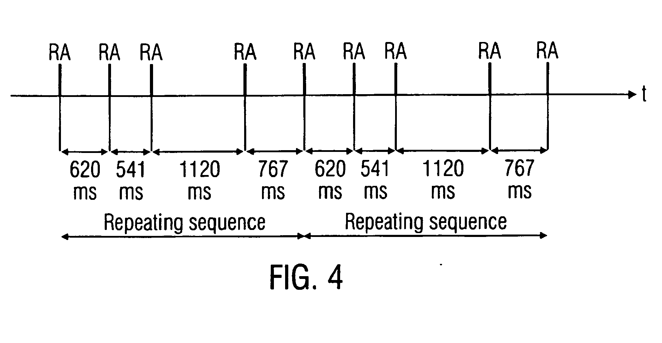

Fig. 4 demonstrates sequences of router advertisement signals and the time intervals separating the time instants (advertisement time instants), at which the router transmits router advertisement signals. As depicted in Fig. 4, these sequences are repeated.

The inventive method consists of scheduling router advertisements at exact times at a router, e.g. at an access router. The ARs sent infrequent broadcasts about the chosen RA schedule, wherein the MNs help in distributing scheduling information to neighbouring ARs, which learn the scheduling information. When scheduling information of a new AR is known then a handover delay can be decreased by delaying the handover until the time of the predicted router advertisement. In order to avoid periodic bursts in network traffic, the sequences which are different for each access router may be repeated.

Furthermore, the inventive network node may be employed for distributing scheduling information, wherein e.g. a mobile node stores all received schedules from access routers, which may use different channels or different radio technologies. In case of a handover, the mobile node or, in general, the network node, informs the new access router about the scheduling of the previous access router using the mentioned neighbour scheduling notice (or signal). The new access router incorporates neighbour schedules into scheduling advertisements so that a learning phase for access routers about the local neighbours may be required.

According to the inventive approach, a handover latency is decreased. Furthermore, radio resources can more efficiently be used since the router advertisements can be sent at a lower rate. Moreover, the inventive approach can be employed in heterogeneous networks independently of the underlying radio technologies so that compatibility with current approaches is provided. Moreover, seamless handovers are provided and a call drop rate, e.g. in the case of voice over IP (VoiP) during handover is decreased which increased the network performance.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing at least one of the inventive methods, when the computer program product runs on a computer. In other words, the inventive methods are, therefore, a computer program having a program code for performing the inventive methods, when the computer program runs on a computer.

## Claims

1. A network node for performing a handover from a first router to a second router in a communication network, the network node being a mobile node, the network node comprising:
a receiver (101) configured for receiving a time schedule signal from the first router, the time schedule signal comprising information based on which a future router advertisement time instant can be derived, at which the second router is expected to transmit an unsolicited router advertisement signal which comprises information required for communicating via the second router;
a detector (103) configured for deriving the information on an expected future router advertisement time instant from the time schedule signal; and
a processor (105) configured for determining, based on the expected future router advertisement time instant, a handover time instant at which to initialise the handover to the second router and for initialising the handover to the second router at the handover time instant, the initialising including disconnecting from the first router, wherein the handover time instant is before the expected future router advertisement time instant.

2. Network node according to claim 1, wherein the time schedule signal comprises information on a reference time instant and information on a time interval separating the reference time instant and the advertisement time instant, wherein the detector (103) is configured for deriving the advertisement time instant by combining the reference time instant with the time interval.

3. Network node according to claim 1 or 2, wherein the router is configured for transmitting a sequence of router advertisement signals, wherein the time schedule signal comprises information on time intervals separating time instants, at which the router transmits router advertisement signals, and information on a reference time instant, wherein the detector (103) is configured for adding at least a time interval to the reference time instant to derive information on the advertisement time instant.

4. Network node according to claims 1 to 3, wherein the router is configured for periodically transmitting a sequence of router advertisement signals, wherein the time schedule signal comprises information on time intervals separating the time instants, at which the router transmits router advertisement signals in the sequence of router advertisement signals, the time schedule signal further comprising information on a reference time signal, wherein the detector (103) is configured for determining the duration of a sequence of router advertisement signals on the basis of the information on the time intervals, and for combining the duration of the sequence with the reference time instant and with a time interval in the sequence of the time intervals to derive the advertisement time instant.

5. Network node according to claims 1 to 4, wherein the receiver is configured for receiving a further time schedule signal from a further router, the further time schedule signal comprising information on a further advertisement time instant, at which the further router transmits a further router advertisement signal which comprises information required for communicating via the further router, and wherein the detector (103) is configured for deriving information on the further advertisement time instant from the further time schedule signal.

6. Network node according to claim 5, wherein the processor (105) is configured for comparing the time instant with the further time instant and for initialising the handover to the router or to the further router on a basis of a comparison result.

7. Network node according to claim 5 or 6, configured for transmitting a neighbour scheduling signal to the router, the neighbour scheduling signal comprising information on a further advertisement time instant at which the further router transmits the further router advertisement signal.

8. Network node according to claims 1 to 7, wherein the processor (105) is configured for subtracting a latency time interval from the advertisement time instant to determine the handover time instant which precedes the advertisement time instant.

9. Network node according to claim 8, wherein the latency time interval is determined by a delay time required by the network node to connect to the router.

10. Network node according to claim 8 or 9, wherein the latency time interval is a layer 2 switching latency of the network node.

11. Network node according to claims 1 to 10, wherein the processor (105) is configured for determining the handover time instant while the network node is attached to another router, wherein the processor (105) is further configured for terminating the attachment to the other router at the handover time instant.

12. Network node according to claims 1 to 11, wherein the router advertisement signal comprises at least a part of a network address of the router, and wherein the processor (105) is configured for generating a network address of the network node by combining at least the part of the network address of the router with at least a part of a MAC (medium access control) address of the network node to obtain the network address of the network node.

13. Router for routing signals over a communication network, the communication network comprising the router as a first router and a second router, the first router comprising:
a provider configured for providing information based on which a future router advertisement time instant can be derived, at which the second router is expected to transmit an unsolicited router advertisement signal which comprises information required for communicating via the second router; and
a transmitter configured for transmitting a time schedule signal over the communication network, the time schedule signal comprising the information based on which the future router advertisement time instant can be derived.

14. Router according to claim 13, wherein the provider is configured for randomly determining the advertisement time instant within a predetermined time interval.

15. Router according to claim 13 or 14, wherein the provider is configured for randomly determining a sequence of time instants at which the router transmits router advertisement signals, and for generating a time schedule signal comprising information on time intervals separating the time instants in the sequence of time instants.

16. Router according to claim 15, wherein the transmitter is configured for periodically transmitting the time schedule signal.

17. Router according to claims 13 to 16, configured for receiving a neighbour scheduling signal from a network node, the neighbour scheduling signal comprising information on a further advertisement time instant at which a further router transmits a further router advertisement signal over the communication network, wherein the provider is configured for determining the advertisement time instant in dependency on the further router advertisement signal.

18. Router according to claim 17, wherein the provider is configured for determining the advertisement time instant at a time instant other than the further advertisement time instant.

19. Method for performing a handover from a first router to a second router in a communication network, the method comprising:
receiving, by a mobile mode, a time schedule signal from the first router, the time schedule signal comprising information based on which a future router advertisement time instant can be derived, at which the second router is expected to transmit an unsolicited router advertisement signal which comprises information required for communicating via the second router;
deriving, by the mobile mode, the information on an expected future router advertisement time instant from the time schedule signal; and
determining, based on the expected future router advertisement time instant, a handover time instant at which to initialise the handover to the second router and initialising the handover to the second router at the handover time instant, the initialising including disconnecting from the first router, wherein the handover time instant is before the expected future router advertisement time instant.

20. Method for routing signals over a communication network from a first router, the communication network comprising the first router and a second router, the method comprising:
providing information based on which a future router advertisement time instant can be derived, at which the second router is expected to transmit an unsolicited router advertisement signal which comprises information required for communicating via the second router; and
transmitting a time schedule signal over the communication network, the time schedule signal comprising the information based on which the advertisement time instant can be derived.

21. Computer program for performing all the steps of the method of claim 19 or 20, when the computer program runs on a computer.

## Patentansprüche

1. Ein Netzwerkknoten zum Durchführen eines Weiterreichens von einem ersten Router an einen zweiten Router in einem Kommunikationsnetzwerk, wobei der Netzwerkknoten ein mobiler Knoten ist, wobei der Netzwerkknoten folgende Merkmale umfasst:
einen Empfänger (101), der zum Empfangen eines Zeitplansignals von dem ersten Router konfiguriert ist, wobei das Zeitplansignal Informationen umfasst, auf deren Basis ein zukünftiger Routerankündigungszeitpunkt abgeleitet werden kann, zu dem man von dem zweiten Router erwartet, dass er ein nicht verlangtes Routerankündigungssignal sendet, das Informationen aufweist, die zum Kommunizieren über den zweiten Router notwendig sind;
einen Detektor (103), der zum Ableiten der Informationen über einen erwarteten zukünftigen Routerankündigungszeitpunkt von dem Zeitplansignal konfiguriert ist; und
einen Prozessor (105), der dazu konfiguriert ist, auf der Basis des erwarteten zukünftigen Routerankündigungszeitpunkts einen Weiterreichzeitpunkt zu bestimmen, zu dem das Weiterreichen an den zweiten Router initialisiert werden soll, und der zum Initialisieren des Weiterreichens an den zweiten Router zu dem Weiterreichzeitpunkt konfiguriert ist, wobei das Initialisieren ein Trennen von dem ersten Router umfasst, wobei der Weiterreichzeitpunkt vor dem erwarteten zukünftigen Routerankündigungszeitpunkt liegt.

2. Netzwerkknoten gemäß Anspruch 1, bei dem das Zeitplansignal Informationen über einen Referenzzeitpunkt und Informationen über ein Zeitintervall, das den Referenzzeitpunkt und den Ankündigungszeitpunkt trennt, umfasst, wobei der Detektor (103) zum Ableiten des Ankündigungszeitpunkts durch Kombinieren des Referenzzeitpunkts mit dem Zeitintervall konfiguriert ist.

3. Netzwerkknoten gemäß Anspruch 1 oder 2, bei dem der Router zum Senden einer Sequenz von Routerankündigungssignalen konfiguriert ist, wobei das Zeitplansignal Informationen über Zeitintervalle, die Zeitpunkte trennen, zu denen der Router Routerankündigungssignale sendet, und Informationen über einen Referenzzeitpunkt umfasst, wobei der Detektor (103) zum Addieren zumindest eines Zeitintervalls zu dem Referenzzeitpunkt, um Informationen über den Ankündigungszeitpunkt abzuleiten, konfiguriert ist.

4. Netzwerkknoten gemäß den Ansprüchen 1 bis 3, bei dem der Router zum periodischen Senden einer Sequenz von Routerankündigungssignalen konfiguriert ist, wobei das Zeitplansignal Informationen über Zeitintervalle umfasst, die die Zeitpunkte trennen, zu denen der Router Routerankündigungssignale in der Sequenz von Routerankündigungssignalen sendet, wobei das Zeitplansignal ferner Informationen über ein Referenzzeitsignal umfasst, wobei der Detektor (103) zum Bestimmen der Dauer einer Sequenz von Routerankündigungssignalen auf der Basis der Informationen über die Zeitintervalle und zum Kombinieren der Dauer der Sequenz mit dem Referenzzeitpunkt und mit einem Zeitintervall in der Sequenz der Zeitintervalle, um den Ankündigungszeitpunkt abzuleiten, konfiguriert ist.

5. Netzwerkknoten gemäß den Ansprüchen 1 bis 4, bei dem der Empfänger zum Empfangen eines weiteren Zeitplansignals von einem weiteren Router konfiguriert ist, wobei das weitere Zeitplansignal Informationen über einen weiteren Ankündigungszeitpunkt umfasst, zu dem der weitere Router ein weiteres Routerankündigungssignal sendet, das Informationen umfasst, die zum Kommunizieren über den weiteren Router notwendig sind, und wobei der Detektor (103) zum Ableiten von Informationen über den weiteren Ankündigungszeitpunkt von dem weiteren Zeitplansignal konfiguriert ist.

6. Netzwerkknoten gemäß Anspruch 5, bei dem der Prozessor (105) zum Vergleichen des Zeitpunkts mit dem weiteren Zeitpunkt und zum Initialisieren des Weiterreichens an den Router oder an den weiteren Router auf einer Basis eines Vergleichsergebnisses konfiguriert ist.

7. Netzwerkknoten gemäß Anspruch 5 oder 6, der zum Senden eines Nachbarplanungssignals an den Router konfiguriert ist, wobei das Nachbarplanungssignal Informationen über einen weiteren Ankündigungszeitpunkt umfasst, zu dem der weitere Router das weitere Routerankündigungssignal sendet.

8. Netzwerkknoten gemäß den Ansprüchen 1 bis 7, bei dem der Prozessor (105) zum Subtrahieren eines Latenzzeitintervalls von dem Ankündigungszeitpunkt, um den dem Ankündigungszeitpunkt vorausgehenden Weiterreichzeitpunkt zu bestimmen, konfiguriert ist.

9. Netzwerkknoten gemäß Anspruch 8, bei dem das Latenzzeitintervall durch eine Verzögerungszeit bestimmt wird, die der Netzwerkknoten benötigt, um sich mit dem Router zu verbinden.

10. Netzwerkknoten gemäß Anspruch 8 oder 9, bei dem das Latenzzeitintervall eine Schicht-2-Schaltlatenz des Netzwerkknotens ist.

11. Netzwerkknoten gemäß den Ansprüchen 1 bis 10, bei dem der Prozessor (105) zum Bestimmen des Weiterreichzeitpunkts, während der Netzwerkknoten an einem anderen Router angeschlossen ist, konfiguriert ist, wobei der Prozessor (105) ferner zum Beenden der Befestigung an dem anderen Router zu dem Weiterreichzeitpunkt konfiguriert ist.

12. Netzwerkknoten gemäß den Ansprüchen 1 bis 11, bei dem das Routerankündigungssignal zumindest einen Teil einer Netzwerkadresse des Routers umfasst und bei dem der Prozessor (105) zum Erzeugen einer Netzwerkadresse des Netzwerkknotens durch Kombinieren zumindest eines Teils der Netzwerkadresse des Routers mit zumindest einem Teil einer MAC-Adresse (MAC = Medium Access Control, Medienzugriffssteuerung) des Netzwerkknotens, um die Netzwerkadresse des Netzwerkknotens zu erhalten, konfiguriert ist.

13. Router zum Routen von Signalen über ein Kommunikationsnetzwerk, wobei das Kommunikationsnetzwerk den Router als einen ersten Router und einen zweiten Router umfasst, wobei der erste Router folgende Merkmale aufweist:
einen Bereitsteller, der zum Bereitstellen von Informationen konfiguriert ist, auf deren Basis ein zukünftiger Routerankündigungszeitpunkt abgeleitet werden kann, zu dem man von dem zweiten Router erwartet, dass er ein nicht verlangtes Routerankündigungssignal sendet, das Informationen aufweist, die zum Kommunizieren über den zweiten Router notwendig sind; und
einen Sender, der zum Senden eines Zeitplansignals über das Kommunikationsnetzwerk konfiguriert ist, wobei das Zeitplansignal die Informationen umfasst, auf deren Basis der zukünftige Routerankündigungszeitpunkt abgeleitet werden kann.

14. Router gemäß Anspruch 13, bei dem der Bereitsteller zum zufälligen Bestimmen des Ankündigungszeitpunkts innerhalb eines vorbestimmten Zeitintervalls konfiguriert ist.

15. Router gemäß Anspruch 13 oder 14, bei dem der Bereitsteller zum zufälligen Bestimmen einer Sequenz von Zeitpunkten konfiguriert ist, zu denen der Router Routerankündigungssignale sendet, und zum Erzeugen eines Zeitplansignals, das Informationen über Zeitintervalle aufweist, die die Zeitpunkte in der Sequenz von Zeitpunkten trennen, konfiguriert ist.

16. Router gemäß Anspruch 15, bei dem der Sender zum periodischen Senden des Zeitplansignals konfiguriert ist.

17. Router gemäß den Ansprüchen 13 bis 16, der zum Empfangen eines Nachbarplansignals von einem Netzwerkknoten konfiguriert ist, wobei das Nachbarplanungssignal Informationen über einen weiteren Ankündigungszeitpunkt umfasst, zu dem ein weiterer Router ein weiteres Routerankündigungssignal über das Kommunikationsnetzwerk sendet, wobei der Bereitsteller zum Bestimmen des Ankündigungszeitpunkts in Abhängigkeit von dem weiteren Routerankündigungssignal konfiguriert ist.

18. Router gemäß Anspruch 17, bei dem der Bereitsteller zum Bestimmen des Ankündigungszeitpunkts zu einem Zeitpunkt, der von dem weiteren Ankündigungszeitpunkt verschieden ist, konfiguriert ist.

19. Verfahren zum Durchführen eines Weiterreichens von einem ersten Router an einen zweiten Router in einem Kommunikationsnetzwerk, wobei das Verfahren folgende Schritte umfasst:
Empfangen, seitens eines mobilen Knotens, eines Zeitplansignals von dem ersten Router, wobei das Zeitplansignal Informationen umfasst, auf deren Basis ein zukünftiger Routerankündigungszeitpunkt abgeleitet werden kann, zu dem man von dem zweiten Router erwartet, dass er ein nicht verlangtes Routerankündigungssignal sendet, das Informationen aufweist, die zum Kommunizieren über den zweiten Router notwendig sind;
Ableiten, seitens des mobilen Knotens, der Informationen über einen erwarteten zukünftigen Routerankündigungszeitpunkt von dem Zeitplansignal; und
Bestimmen, auf der Basis des erwarteten zukünftigen Routerankündigungszeitpunkts, eines Weiterreichzeitpunkts, zu dem das Weiterreichen an den zweiten Router initialisiert werden soll, und Initialisieren des Weiterreichens an den zweiten Router zu dem Weiterreichzeitpunkt, wobei das Initialisieren ein Trennen von dem ersten Router umfasst, wobei der Weiterreichzeitpunkt vor dem erwarteten zukünftigen Routerankündigungszeitpunkt liegt.

20. Verfahren zum Routen von Signalen über ein Kommunikationsnetzwerk, wobei das Kommunikationsnetzwerk den Router als einen ersten Router und einen zweiten Router umfasst, wobei das Verfahren folgende Schritte umfasst:
Bereitstellen von Informationen, auf deren Basis ein zukünftiger Routerankündigungszeitpunkt abgeleitet werden kann, zu dem man von dem zweiten Router erwartet, dass er ein nicht verlangtes Routerankündigungssignal sendet, das Informationen aufweist, die zum Kommunizieren über den zweiten Router notwendig sind; und
Senden eines Zeitplansignals über das Kommunikationsnetzwerk, wobei das Zeitplansignal die Informationen umfasst, auf deren Basis der Ankündigungszeitpunkt abgeleitet werden kann.

21. Computerprogramm zum Durchführen aller Schritte des Verfahrens gemäß Anspruch 19 oder 20, wenn das Computerprogramm auf einem Computer läuft.

## Revendications

1. Noeud de réseau pour effectuer un transfert cellulaire d'un premier router à un deuxième router dans un réseau de communication, le noeud de réseau étant un noeud mobile, le noeud de réseau comprenant:
un récepteur (101) configuré pour recevoir un signal de planning de temps du premier router, le signal de planning de temps comprenant des informations sur base desquelles peut être dérivé un moment de publicité de router futur auquel il est attendu que le deuxième router transmette un signal de publicité de router non sollicité qui comprend les informations requises pour communiquer via le deuxième router;
un détecteur (103) configuré pour dériver les informations sur un moment de publicité de router futur attendu du signal de planning de temps; et
un processeur (105) configuré pour déterminer, sur base du moment de publicité de router futur attendu, un moment de transfert cellulaire auquel il y a lieu d'initialiser le transfert cellulaire au deuxième router et pour initialiser le transfert cellulaire au deuxième router au moment de transfert cellulaire, l'initialisation comprenant la déconnexion du premier router, où le moment de transfert cellulaire est avant le moment de publicité de router futur attendu.

2. Noeud de réseau selon la revendication 1, dans lequel le signal de planning de temps comprend des informations sur un moment de référence et des informations sur un intervalle de temps séparant le moment de référence et le moment de publicité, dans lequel le détecteur (103) est configuré pour dériver le moment de publicité en combinant le moment de référence avec l'intervalle de temps.

3. Noeud de réseau selon la revendication 1 ou 2, dans lequel le router est configuré pour transmettre une séquence de signaux de publicité de router, dans lequel le signal de planning de temps comprend des information sur les intervalles de temps séparant les moments auxquels le router transmet des signaux de publicité de router, et des informations sur un moment de référence, dans lequel le détecteur (103) est configuré pour ajouter au moins un intervalle de temps au moment de référence, pour dériver des informations sur le moment de publicité.

4. Noeud de réseau selon les revendications 1 à 3, dans lequel le router est configuré pour transmettre périodiquement une séquence de signaux de publicité de router, dans lequel le signal de planning de temps comprend des informations sur les intervalles de temps séparant les moments auxquels le router transmet des signaux de publicité de router dans la séquence of signaux de publicité de router, le signal de planning de temps comprenant par ailleurs des informations sur un signal de temps de référence, dans lequel le détecteur (103) est configuré pour déterminer la durée d'une séquence de signaux de publicité de router sur base des informations sur les intervalles de temps, et pour combiner la durée de la séquence avec le moment de référence et avec un intervalle de temps dans la séquence d'intervalles de temps, pour dériver le moment de publicité.

5. Noeud de réseau selon les revendications 1 à 4, dans lequel le récepteur est configuré pour recevoir un autre signal de planning de temps d'un autre router, l'autre signal de planning de temps comprenant des informations sur un autre moment de publicité auquel l'autre router transmet un autre signal de publicité de router qui comprend les informations requises pour communiquer via l'autre router, et dans lequel le détecteur (103) est configuré pour dériver les informations sur l'autre moment de publicité de l'autre signal de planning de temps.

6. Noeud de réseau selon la revendication 5, dans lequel le processeur (105) est configuré pour comparer le moment avec l'autre moment et pour initialiser le transfert cellulaire au router ou à l'autre router sur base d'un résultat de comparaison.

7. Noeud de réseau selon la revendication 5 ou 6, configuré pour transmettre un signal de planification voisin au router, le signal de planification voisin comprenant des informations sur un autre moment de publicité auquel l'autre router transmet l'autre signal de publicité de router.

8. Noeud de réseau selon les revendications 1 à 7, dans lequel le processeur (105) est configuré pour soustraire un intervalle de temps d'attente du moment de publicité, pour déterminer le moment de transfert cellulaire qui précède le moment de publicité.

9. Noeud de réseau selon la revendication 8, dans lequel l'intervalle de temps d'attente est déterminé par un temps de retard requis par le noeud de réseau pour se connecter au router.

10. Noeud de réseau selon la revendication 8 ou 9, dans lequel l'intervalle de temps d'attente est un retard de commutation de couche 2 du noeud de réseau.

11. Noeud de réseau selon les revendications 1 à 10, dans lequel le processeur (105) est configuré pour déterminer le moment de transfert cellulaire tandis que le noeud de réseau est connecté à un autre router, dans lequel le processeur (105) est configuré par ailleurs pour terminer la connexion à l'autre router au moment de transfert cellulaire.

12. Noeud de réseau selon les revendications 1 à 11, dans lequel le signal de publicité de router comprend au moins une partie d'une adresse de réseau du router, et dans lequel le processeur (105) est configuré pour générer une adresse de réseau du noeud de réseau en combinant au moins la partie de l'adresse de réseau du router avec au moins une partie d'une adresse MAC (medium access control) du noeud de réseau, pour obtenir l'adresse de réseau du noeud de réseau.

13. Router pour le routage de signaux via un réseau de communication, le réseau de communication comprenant le router comme premier router et un deuxième router, le premier router comprenant:
un fournisseur configuré pour fournir des informations sur base desquelles peut être dérivé un moment de publicité de router futur auquel il est attendu que le deuxième router transmette un signal de publicité de router non sollicité qui comprend les informations requises pour communiquer via le deuxième router; et
un émetteur configuré pour émettre un signal de planning de temps par le réseau de communication, le signal de planning de temps comprenant les informations sur base desquelles peut être dérivé le moment de publicité de router futur.

14. Router selon la revendication 13, dans lequel le fournisseur est configuré pour déterminer de manière aléatoire le moment de publicité dans un intervalle de temps prédéterminé.

15. Router selon la revendication 13 ou 14, dans lequel le fournisseur est configuré pour déterminer de manière aléatoire une séquence de moments auxquels le router transmet des signaux de publicité de router, et pour générer un signal de planning de temps comprenant des informations sur les intervalles de temps séparant les moments dans la séquence de moments.

16. Router selon la revendication 15, dans lequel l'émetteur est configuré pour émettre périodiquement le signal de planning de temps.

17. Router selon les revendications 13 à 16, configuré pour recevoir un signal de planification voisin d'un noeud de réseau, le signal de planification voisin comprenant des informations sur un autre moment de publicité auquel un autre router émet un autre signal de publicité de router via le réseau de communication, dans lequel le fournisseur est configuré pour déterminer le moment de publicité en fonction de l'autre signal de publicité de router.

18. Router selon la revendication 17, dans lequel le fournisseur est configuré pour déterminer le moment de publicité à un moment autre que l'autre moment de publicité.

19. Procédé pour effectuer un transfert cellulaire d'un premier router à un deuxième router dans un réseau de communication, le procédé comprenant:
recevoir par un noeud mobile un signal de planning de temps du premier router, le signal de planning de temps comprenant les informations sur base desquelles peut être dérivé un moment de publicité de router futur auquel il est attendu que le deuxième router émette un signal de publicité de router non sollicité qui comprend les informations requises pour communiquer via le deuxième router;
dériver par le noeud mobile les informations sur un moment de publicité de router futur attendu du signal de planning de temps; et
déterminer, sur base du moment de publicité de router futur attendu, un moment de transfert cellulaire auquel il y a lieu d'initialiser le transfert cellulaire au deuxième router et initialiser le transfert cellulaire au deuxième router au moment de transfert cellulaire, l'initialisation comprenant le fait de déconnecter du premier router, où le moment de transfert cellulaire est avant le moment de publicité de router futur attendu.

20. Procédé pour le routage de signaux via un réseau de communication à partir d'un premier router, le réseau de communication comprenant le premier router et un deuxième router, le procédé comprenant:
fournir des informations sur base desquelles peut être dérivé un moment de publicité de router futur auquel il est attendu que le deuxième router émette un signal de publicité de router non sollicité qui comprend les informations requises pour communiquer via le deuxième router; et
émettre un signal de planning de temps via le réseau de communication, le signal de planning de temps comprenant les informations sur base desquelles peut être dérivé le moment de publicité.

21. Programme d'ordinateur pour réaliser toutes les étapes du procédé selon la revendication 19 ou 20 lorsque le programme d'ordinateur est exécuté sur un ordinateur.
